# EUROPEAN PATENT APPLICATION

(11) **EP 4 794 353 A1**
(43) Date of publication of application: **19.08.2026**
(21) Application number: 25157988.4
(22) Date of filing: 14.02.2025
(51) Int. Cl.: H04R 3/02, H04M 3/00, H04M 3/56, H04M 9/08, H04R 27/00

(54) **METHOD OF DETERMINING A ROUNDTRIP LATENCY IN A CONFERENCE SYSTEM AND CONFERENCE SYSTEM**

(71) Applicant: Televic NV., 8870 Izegem (BE)
(72) Inventor: Van Parys, Hans, 8200 Sint-Andries Brugge (BE)
(74) Representative: Ipsilon Belgium

(57) **Abstract**

The invention relates to a method of determining a roundtrip latency in a conference system, comprising the steps of generating a pulse in a conference unit of the conference system at a known start time, wherein the conference unit comprises a microphone and a loudspeaker, upstream transmitting an audio signal from the conference unit to a central unit of the conference system, wherein the audio signal comprises the pulse, and wherein the pulse is an in-band signal of the audio signal, processing the audio signal in the central unit, resulting in a processed signal, wherein the processed signal comprises a processed pulse, downstream transmitting the processed signal to the conference unit, determining in the conference unit an arrival time of the processed pulse in the processed signal, and calculating the roundtrip latency as a difference between the start time of the pulse and the arrival time of the processed pulse.

## Description

### Technical scope

The present invention relates in general to a method of determining a roundtrip latency in a conference system. In particular, the invention provides a method for determining the roundtrip latency in a conference system with an unknown or variable roundtrip latency. In a second aspect the invention also relates to a conference system configured for carrying out the method.

### Background of the invention

Conference rooms are often equipped with conference systems enabling a large number of users, for instance tens up to hundreds of users, to participate to a single conference. A conference system typically comprises a central unit and a plurality of conference units coupled to the central unit via a network. A separate conference unit may for instance be provided for each user, or a conference unit may be shared by two users at neighbouring seats in the conference room. Each conference unit typically has a microphone and a loudspeaker. Each conference unit comprises a transmitter able to upstream transmit an audio signal, i.e. the signal captured by its microphone, to a receiver in the central unit. Similarly, the central unit comprises a transmitter able to downstream transmit a processed signal composed of processed audio signals received from a subset of conference units to the receivers of the conference units.

In a typical situation, a few microphones of a few conference units are open at a time. A user can for instance press a button on his conference unit to open the microphone or to send a request to open the microphone to a moderator which then controls opening the user's microphone. The loudspeaker of each conference unit emits sound corresponding to the received processed signal. This processed signal is composed at the central unit and typically combines the speaker signals received from all conference units with open microphone. Combining the speaker signals of open microphones into a processed signal involves processing of these speaker signals like automatic gain control (AGC), automatic gain reduction (AGR), equalizing, filtering, noise reduction, etc. The processing may be dynamic. As an example, the processing of an audio signal received from a conference unit with open microphone may vary in time depending on the total amount of simultaneous open microphones, the level of the audio signal received from other conference units with open microphones, etc. Hence, the processed signal received by all conference units comprises contributions of audio signals of a subset of conference units, more particularly the conference units with open microphones. The contributions of the respective audio signals in the processed signal are a result of processing at the central unit that may be dynamic in time.

The central unit downstream transmits the processed signal to all conference units in the conference room for playout via the loudspeaker. A conference unit with open microphone consequently shall receive the processed signal and shall output this processed signal via its loudspeaker. The presence of an open microphone at close distance to the loudspeaker can cause acoustic feedback from the conference unit's loudspeaker to its microphone, finally resulting in hauling or whistling, also known as the Larsen effect: the sound outputted by the loudspeaker is received by the microphone which amplifies the sound and re-transmits the sound (via the central unit composing the processed signal) again to the loudspeaker to be outputted, and so on.

A solution for this problem is disclosed in EP 4 485 971 (EP '971). EP '971 discloses a conference system wherein the acoustic feedback is supressed by a so-called local mix-minus solution. The central unit of the conference system composes a processed signal that combines the audio signals of all conference units with open microphones and downstream transmits the processed signal to the conference units. Each conference unit subtracts locally an estimated contribution of its own audio signal from the processed signal (local mix-minus solution). The resulting signal is outputted through the loudspeaker of the conference unit.

The conference system disclosed in EP '971 has the important advantage that the processing requirements for the central unit are reduced. The central unit does not need to compose a different processed signal for each conference unit with an open microphone, in which said processed signal is composed of the audio signals from the other conference units with an open microphone. A single processed signal for all conference unit is sufficient. Another huge advantage of the solution in EP '971 is that it reduces the bandwidth required to downstream transmit the processed signal.

The conference unit of EP '971 itself must be able to compensate for a roundtrip latency in the conference system. The conference unit comprises for that purpose a memory configured to store a portion of its own audio signal and an adaptive filter. The memory can be used for a fixed delay and the adaptive filter can compensate for small variations in the roundtrip latency. An important disadvantage of EP '971 is thus that the constrained hardware of the conference units only allows to compensate for roundtrip latencies that vary only slightly over time. However, the central unit of the conference system may be coupled to an external system that does additional processing. This may introduce an important and unknown processing delay, influencing the total roundtrip latency. This processing delay may be greater than the variations in roundtrip latency that can be compensated with an adaptive filter, resulting in the Larsen effect. In addition, the processing delay introduced by the external system may vary in time, depending on the processing blocks selected in the external system.

It is an object of the present invention to describe a solution that overcomes one or more of the described disadvantages of prior art solutions.

### Summary of the invention

In a first aspect, the present invention relates to a method according to claim 1.

The method has as advantage that the roundtrip latency can be easily determined by the conference unit itself. It is not required that the roundtrip latency is known upfront or measured with external tools. Determining the roundtrip latency using an in-band signal is beneficial because the pulse will be processed by the central unit and an eventual external unit, resulting in a same roundtrip latency as for actual audio signals that are captured by the microphone of the conference unit.

Preferred embodiments of the method are shown in claims 2 to 15.

A specific preferred embodiment concerns a method according to claim 2.

Mixing the microphone signal and the pulse is beneficial because the roundtrip latency can be determined while using the conference system. The roundtrip latency does not have to be determined upfront. This has the additional advantage that the roundtrip latency can be easily redetermined during use of the conference system, for instance when the roundtrip latency changes due to changes in the network of due to changes in the settings of the processing of the audio signals in the central unit or eventual external unit.

In a second aspect, the present invention relates to a conference according to claim 16.

This conference system has the advantage that each conference unit can easily and independently determine the roundtrip latency. The roundtrip latency does not have to be known or determined upfront for each conference unit individually, for instance with the use of external tools. Also beneficial is that the roundtrip latency may be different for each conference unit.

### Short description of the figures

**Figure 1** shows a functional block scheme of a conference system according to an embodiment of the current invention.
**Figure 2** shows a functional block scheme of a conference unit of a conference system according to an embodiment of the current invention.
**Figure** 3 shows a recording of a processed pulse according to an embodiment of the current invention.
**Figure 4** shows a functional block scheme of a pulse generation block according to an embodiment of the current invention.

### Detailed description

Unless otherwise defined, all terms used in the description of the invention, including technical and scientific terms, have the meaning as commonly understood by a person skilled in the art to which the invention pertains. For a better understanding of the invention, the following terms are explained explicitly.

In this document, "a" and "the" refer to both the singular and the plural, unless the context presupposes otherwise. For example, "a segment" means one or more segments.

Quoting numerical ranges by endpoints includes all integers, fractions and/or real numbers between the endpoints, these endpoints included.

In the context of this document, a pulse is an audio wave or modulation thereof of brief duration. The pulse itself can be considered a transient variation of an audio signal, the value of which is normally constant. The audio wave may be represented as digital samples. Another word for pulse in this context is burst.

In the context of this document pulses are orthogonal when the pulses are not cross correlated, preferably not circularly cross correlated.

In the context of this document a roundtrip latency is a time it takes an audio signal to travel from a conference unit to a central unit of a conference system and back to the conference unit. The roundtrip latency comprises at least transmission and receiving delays in the conference unit and the central unit, packetization delay, processing time to process the audio signal in the central unit and a time taken by a network to transmit the audio signal from the conference unit to the central unit and back.

In a first aspect, the invention relates to a method for determining a roundtrip latency in a conference system.

In a preferred embodiment the method comprises the steps of:
- generating a pulse with a predefined length in a conference unit of the conference system at a known start time,
- upstream transmitting an audio signal from the conference unit to a central unit of the conference system, wherein the audio signal comprises the pulse, and wherein the pulse is an in-band signal of the audio signal,
- processing the audio signal in the central unit, resulting in a processed signal, wherein the processed signal comprises a processed pulse,
- downstream transmitting the processed signal to the conference unit,
- determining in the conference unit an arrival time of the processed pulse in the processed signal,
- calculating the roundtrip latency as a difference between the start time of the pulse and the arrival time of the processed pulse.

The conference unit comprises a microphone and a loudspeaker. The microphone is suited for capturing a speaker's voice.

The audio signal is a digitized audio signal. Typical sampling frequencies for the audio signal are 44.1 kHz and 48 kHz. Preferably the audio signal is sampled at a frequency of 48 kHz or higher. The audio signal is transmitted as data packets to the central unit. The data packets may or may not be compressed. The pulse may appear in the time domain in a shape of a single peak, a train of multiple peaks, a sine wave or any other suited shape. The pulse has preferably a predefined length of at most 4096 samples, more preferably at most 2048 samples and even more preferably at most 1024 samples. The pulse has preferably a predefined length of at least 256 samples, and more preferably at least 512 samples. A pulse of this length is sufficiently long so that it can be recognized in the processed signal and sufficiently short so that it disrupts normal audio signals as little as possible. The pulse may be an only signal present in the audio signal, for instance when the roundtrip latency is determined during setup or before actual use of the conference system during a meeting or conference. The pulse may be mixed with other signals, for instance with a microphone signal during actual use of the conference system during a meeting or conference. The pulse is an in-band signal, meaning that the pulse falls in a same frequency range that is available for useful audio signals, such as but not limited to voices, jingles and music. For instance said frequence range starts at 0 kHz and ends at 22.05 kHz or ends at 24 kHz.

The audio signal is upstream transmitted to the central unit over a first network. The processed signal is downstream transmitted to the conference unit over a second network. The first and the second network are preferably the same network. The network may be a wired network, such as an ethernet network, or a wireless network, such as a Wi-Fi network. Since the pulse is an in-band signal of the audio signal, the pulse and the processed pulse will be delayed across the network just as much as the useful audio signals.

Processing the audio signal in the central unit may comprise several steps for enhancing the audio signal. Non-limitative examples of such enhancing steps are automatic gain control (AGC), automatic gain reduction (AGR), equalizing, filtering, noise reduction, ... Processing the audio signal in the central unit may comprise mixing audio signals originating from one or more other conferencing units of the conference system, as will be described in later embodiments. Since the pulse is an in-band signal of the audio signal, the pulse is processed by the central unit in a same way as the useful audio signals, resulting in a processed pulse comprised in the processed signal. The processed pulse will be delayed just as much as processed useful audio signals in the processed signal.

Determining the arrival time of the processed pulse may be done by detecting one or more edges of the processed pulse. This is especially useful when the pulse is for instance the only signal present in the audio signal. The detection of the one or more edges of the processed pulse will not be disturbed by the presence of any useful audio signal. To increase the accuracy of the detection of the one or more edges of the processed pulse, an edge enhancement algorithm may be applied in the conference unit. A detection of the one or more edges is an indication of the arrival time.

Determining the arrival time of the processed pulse may be done by detecting a frequency component in the processed signal. This is especially useful when the pulse is for instance in the shape of a sine wave and when the pulse is for instance the only signal present in the audio signal. The detection of the frequency component will not be disturbed by the presence of any useful audio signal. A detection of the frequency component is an indication of the arrival time.

Determining the arrival time of the processed pulse may be done by searching for a similarity in the processed signal between a part of the processed signal and the pulse. This can for instance be done by searching for patterns similar to the pulse or by cross correlating the processed signal with the pulse. When a similarity is found in the processed signal or when a cross correlation between the processed signal and the pulse is found, a position of the similarity in the processed signal or a position of where the processed signal and the pulse are cross correlated, is an indication of the arrival time of the processed pulse. This can be used when the pulse is the only signal present in the audio signal and when the pulse is mixed with other useful audio signals.

It is clear for the skilled person that other ways to determine the arrival time of the processed pulse can be envisaged.

The calculated roundtrip latency does not necessarily have to be accurate to within one sample. For instance, the conference unit may comprise an adaptive filter. The adaptive filter can compensate for small variations in the roundtrip latency and consequently for small errors in the calculated roundtrip latency. Preferably an error on the calculated roundtrip latency is equal to or less than 50 samples, more preferably equal to or less than 25 samples, even more preferably equal to or less than 10 samples, and most preferably equal to or less than 5 samples.

The method has as advantage that the roundtrip latency can be easily determined by the conference unit itself. It is not required that the roundtrip latency is known upfront or measured with external tools. Determining the roundtrip latency using an in-band signal is beneficial because the pulse will be processed by the central unit and an eventual external unit, resulting in a same roundtrip latency as for actual audio signals that are captured by the microphone of the conference unit.

In a further embodiment the method comprises the additional steps of:
- capturing a microphone signal with the microphone of the conference unit,
- mixing the microphone signal in the conference unit with the pulse of the predefined length, resulting in the audio signal,
- playing the processed signal on the loudspeaker of the conference unit.

The microphone is used to capture a speaker's voice. The speaker is the user of the conference unit. The audio signal comprising the mixed microphone signal and the pulse are processed together in the central unit and downstream transmitted from the central unit to the conference unit. Consequently the pulse has the same roundtrip latency as the microphone signal. Processing the audio signal in the central unit may comprise mixing audio signals originating from two or more other conferencing units of the conference system, as will be described in later embodiments. However, it is not necessary for determining the roundtrip latency that the audio signal of the conference unit is mixed in the central unit with audio signals originating from one or more other conferencing units. Preferably the processed microphone signal is removed in the conference unit from the processed signal before playing the processed signal on the loudspeaker, as will be described in a later embodiment.

Mixing the microphone signal and the pulse is beneficial because the roundtrip latency can be determined while using the conference system. The roundtrip latency does not have to be determined upfront. This has the additional advantage that the roundtrip latency can be easily redetermined during use of the conference system, for instance when the roundtrip latency changes due to changes in the network of due to changes in the settings of the processing of the audio signals in the central unit or eventual external unit.

In an embodiment the method comprises the step of applying external processing on the audio signal in an external unit, resulting in an externally processed signal. The external unit may be a controller or server that is coupled to an interface of the central unit. The interface may be an audio interface, a network interface or another suited interface. The external unit may or may not be from another manufacturer than the conference system. The external unit may be used to apply additional processing steps like automatic gain control (AGC), automatic gain reduction (AGR), equalizing, filtering, noise reduction, ... The external unit may be used to mix additional external audio signals with the audio signal from the conference unit, for instance audio signals originating from remote speakers or audio from a video clip. The external processing may occur before, after or as an intermediate step of the processing in the central unit. Because the pulse is an in-band signal of the audio signal from the conference unit, the processed pulse will be delayed just as much as externally processed useful audio signals in the externally processed signal. It is clear that the delay introduced by the external processing will be taken into account automatically when determining the roundtrip latency. Therefore, a processed signal may refer to a signal that has been processed in the central unit only or that has been processed in the central unit and externally.

In a preferred embodiment the roundtrip latency is periodically recalculated. This means that different steps of the method are periodically repeated. Preferably the different steps are repeated with an interval of maximum 1 minute, more preferably maximum 30 seconds, even more preferably maximum 10 seconds and most preferably maximum 5 seconds. Preferably the interval is at least 3 seconds.

This embodiment is advantageous because when the roundtrip latency is changed, for instance because settings of the processing in the central unit are changed or due to an unstable network, the conference system will automatically recalculate the roundtrip latency. Potential issues with the Larsen effect can be automatically corrected, without interference of an operator.

In an embodiment the central unit sends a trigger to the conference unit when settings of the processing in the central unit are changed. This may change the delay of the processing in the central unit. On receiving the trigger, the conference unit re-executes the method to re-calculate the roundtrip latency. This embodiment is advantageous to automatically recalculate the roundtrip latency in the case of changes processing settings.

In a preferred embodiment the arrival time of the processed pulse is determined in the processed signal by cross correlating the processed signal with the pulse. Cross correlation is used to detect the presence of a signal with a known form, being the pulse. Cross correlation measures the similarity between two different signals, in our case the pulse and the processed pulse. When the processed signal and the pulse are at a certain position cross correlated, it means that the processed pulse is present at that position in the processed signal. From said position the arrival time of the processed pulse can be determined. It is clear to the skilled person that the processed signal must be cross correlated at said position with the pulse as if it would also have been delayed with the roundtrip latency. This can be done by regenerating the pulse at said position or by storing the pulse in memory and reading the pulse at said position from memory. This embodiment is very beneficial because cross correlation allows to detect the presence of the pulse when multiple signals are sent over a single communication channel. In our case when the pulse is mixed in the conference unit with a microphone signal and/or when the audio signal of the conference unit is mixed with audio signals originating from one or more other conferencing units of the conference system. This allows to determine the roundtrip latency when the conference system is in use.

In an embodiment, the pulse is split from the audio signal in the central unit. The pulse is for instance split from the audio signal with the use of a filter bank. The audio signal minus the pulse is processed in the central unit. The processing of the audio signal minus the pulse takes a processing time T. The pulse is delayed by the central unit by the processing time T. The pulse is re-added to the processed signal before the central unit downstream transmits the processed signal to the conference unit.

The pulse may be split from the audio signal at a start of the processing in the central unit and may be re-added to the processed signal at an end of the processing in the central unit. Alternatively, the pulse may be split from the audio signal at an intermediate step of the processing and re-added after said intermediate step. Preferably the pulse is split from the audio signal at the intermediate step and re-added after the intermediate step.

This embodiment is advantageous if the processing comprises an intermediate step where, for example, a gain is applied that would result in a very small processed pulse or even a completely removed processed pulse, so that the arrival time of the processed pulse cannot be determined. It is clear that when the processing includes multiple such intermediate steps, this embodiment can be applied to each of these intermediate steps.

In an embodiment the pulse is a maximum length sequence (MLS) or a transformed maximum length sequence. A transformed MLS refers to an MLS that has undergone a number of transformations, for example as described in a later embodiment.

A maximum length sequence (MLS) is a type of pseudorandom binary sequence. An MLS is a bit sequence that can be generated using linear-feedback shift registers. The bit sequence may be generated in real time or may be generated upfront and stored in memory. An MLS has the longest possible period for a given length of the shift register. When using a shift register of length M, the length N of the MLS is equal to 2^{M}-1. The ones in the bit sequence are replaced by the value 1. The zeros in the bit sequence are replaced by the value -1. The values 1 and -1 are samples representing the MLS. An MLS exhibits three properties: the balance property, the run property and the correlation property. The balance property means that a number of logic ones is one more than a number of logic zeros. A run is defined as a subsequence of identical symbols. The run property means that half the runs in an MLS is of length one, one fourth of the runs is of length two, one eight of the runs is of length three, and so on. The total number of runs for an MLS generated using a shift register of length M is (M+1)/2. The correlation property means that the circular autocorrelation of an MLS is a Kronecker Delta function. The circular autocorrelation is equal to N when the MLS coincides with itself and -1 when the MLS is shifted relative to itself. The correlation property is very useful for efficiently cross correlating the processed signal with the pulse, as will be described in a later embodiment.

Different maximum length sequences of the same length are orthogonal. This is very beneficial because each of these different maximum length sequences could be used as pulse for another conference unit, as will be described in a later embodiment.

Each sample of the MLS or the transformed MLS may be scaled relative to the amplitude of the audio signal.

In a further embodiment the maximum length sequence is transformed. Transforming the maximum length sequence comprises the steps of:
- upsampling the maximum length sequence to an upsampled maximum length sequence,
- modulating the upsampled maximum length sequence to a modulated maximum length sequence,
- high pass filtering the modulated maximum length sequence to the transformed maximum length sequence.

An MLS is spectrally flat, with the exception of a near-zero term at 0 kHz. The MLS is upsampled by a factor X by repeating each sample of the MLS X-1 times. The spectrum of the upsampled MLS changes from flat to a number of lobes, wherein the lobe closest to 0 kHz has the highest spectral power.

The upsampled MLS is subsequently modulated by multiplying each subsequent sample alternatingly with 1 or -1. The result is a modulated MLS with a mirrored spectrum. The lobe with the highest spectral power is now the lobe with the highest frequency. The energy of the modulated MLS is shifted to the higher frequencies.

Finally the modulated MLS will be high pass filtered to reduce even further the power of the transformed MLS in the lower frequencies. The result is that the transformed MLS has a majority of its spectral power in the higher frequencies, where it is barely audible to a human, especially when it is masked by other useful audio signals, such as voices or music. This makes the transformed MLS very beneficial to determine the roundtrip latency during the use of the conference system. The applicant also surprisingly found that the properties of the MLS were largely preserved in the transformed MLS. For instance different transformed maximum length sequences of the same length are still orthogonal and the circular autocorrelation of a transformed MLS is close to a Kronecker Delta. Instead of a single peak, the peak has widened over multiple shift positions.

In a preferred embodiment at least 80% of signal power of the pulse is above a threshold frequency. Preferably at least 85% of the signal power is above the threshold frequency, more preferably at least 90%.

The threshold frequency is at least 18 kHz, preferably at least 19 kHz and more preferably at least 20 kHz.

This embodiment is advantageous because the pulse has a majority of its spectral power in the higher frequencies, where it is barely audible to a human, especially when it is masked by other useful audio signals, such as voices or music. This makes the pulse very beneficial to determine the roundtrip latency during the use of the conference system. This embodiment is especially advantageous in combination with a transformed MLS.

In a preferred embodiment the processed signal is cross correlated with the pulse using a sliding window. The sliding window has a length that is equal to the length of the pulse.

The cross correlation *C*(*x, y*) of two discrete-time signals *x*[*n*] and *y*[*n*] can be calculated using the formula: $C \left(x, y\right) = {\sum }_{n = {n}_{1}}^{{n}_{2}} x \left[n\right] y \left[n\right]$

The variables *n*₁ and *n*₂ define the interval over which we are calculating the cross correlation. The two discrete-time signals *x*[*n*] and *y*[*n*] are respectively the processed signal and the pulse. The cross correlation may be normalized. To detect the position of the processed pulse in the processed signal, the processed signal must be cross correlated with the pulse at every sampling position of the processed signal. This can be realized using a sliding window with the length of the pulse that shifts each time one sample and selects a number of consecutive samples from the processed signal falling inside the sliding window. This corresponds to the following formula, also called running or sliding correlation: $\begin{matrix}r \left[k\right] = C \left(x\left[n-k\right],y\left[n\right]\right) , k = 0 , 1 , 2 , … \\ = {\sum }_{n} x \left[n-k\right] y \left[n\right] , k = 0 , 1 , 2 , …\end{matrix}$

When the cross correlation *r*[*k*] is higher than a predefined threshold, it is decided that the processed pulse is present at the current position k of the sliding window. The arrival time of the processed pulse can be determined from the current position k of the sliding window. This embodiment has as drawback that it is computation intensive. The cross correlation must be recalculated at the sampling frequency.

In an alternative embodiment the pulse in the audio signal is immediately repeated by an identical pulse in said audio signal. The pulse is an MLS or a transformed MLS. If the pulse is mixed with a microphone signal, as described in a previous embodiment, then preferably also the identical pulse is mixed with the microphone signal. The identical pulse is similarly as the pulse processed to a processed identical pulse.

Repeating the pulse with an identical pulse could also be described as a single burst that exists of a repetition of two subsequent and identical base sequences. The base sequence has a length that is equal to half the predetermined length. The base sequence is an MLS or a transformed MLS.

The processed signal is recorded in the conference unit from a predefined time after the start time of the pulse. The processed signal is recorded during a period equal to the predefined length. The predefined time is equal to or greater than a predefined maximum expected roundtrip latency and less than or equal to a predefined minimum expected roundtrip latency plus the predefined length. The predefined maximum expected roundtrip latency can be estimated based on experience or experimentation, can be equal to a maximum acceptable roundtrip latency, can be measured once with the use of external tools and with maximum processing of the audio signal enabled in the conference unit, the central unit and the optional external unit or can be determined in any other meaningful way. The predefined minimum latency can be estimated based on experience or experimentation, can be measured once with the use of external tools and with minimum or no processing of the audio signal enabled in the conference unit, the central unit and the optional external unit or can be determined in any other meaningful way. The roundtrip latency will in this case mostly be determined by transmission and receiving delays in the conference unit and the central unit, packetization delay, and a time taken by a network to transmit the audio signal from the conference unit to the central unit and back.

The recorded processed signal is circularly cross correlated with the pulse. Preferably the recorded processed signal is circularly cross correlated in the frequency domain. This is advantageous for limiting computation requirements in the conference unit.

Because of the use of an MLS or a transformed MLS as the pulse and the identical pulse, it is sufficient to record the processed signal only during a period equal to the predefined length. If the predefined time after the start of the pulse does not coincide with the arrival time of the processed pulse, a complete period of the processed MLS or processed transformed MLS can still be recorded. A first part of the complete period will be a last part of the processed pulse and a second part of the complete period will be a first part of the processed identical pulse. Because the predefined time is equal to or greater than the predefined maximum expected roundtrip latency, it is not possible that both the processed pulse and the processed identical pulse have not yet at least partly arrived at the conference unit. If the processed pulse and the processed identical pulse have not yet arrived at the conference unit, they cannot be recorded. Because the predefined time is less than or equal to a predefined minimum expected roundtrip latency plus the predefined length, the recording starts before or at the moment the processed identical pulse arrives at the conference unit.

If the recorded processed signal comprises a part of the processed pulse and a part of the processed identical pulse, circularly cross correlating the processed signal with the pulse will indicate a position of the processed identical pulse instead of the processed pulse. However, because the pulse is repeated immediately by the identical pulse, the processed pulse will be followed immediately by the processed identical pulse and the position of the processed pulse can be derived from the position of the processed identical pulse. It is possible to determine the arrival time of the processed pulse.

This embodiment is beneficial because the arrival time of the processed pulse can be determined by calculating a single circular cross correlation, limiting the computation requirements of the conference unit.

In a further embodiment, the predefined length is equal to or greater than a difference between the predefined maximum expected roundtrip latency and the predefined minimum expected roundtrip latency. This is very beneficial because independent of the actual roundtrip latency, a complete period of the MLS or transformed MLS will be recorded. This can be the complete processed pulse, the complete processed identical pulse or a combination of a last part of the processed pulse and a first part of the processed identical pulse.

In a preferred embodiment, the pulse in the audio signal is immediately repeated by an identical pulse in said audio signal as described in a previous embodiment. The central unit receives from each conference unit of a group of conference units an audio signal. The group of conference units may comprise all conference units or a subgroup of conference units. A subgroup of conference units comprises at least two conference units. The group may have a changing composition. For instance the group may comprise all conference units having a microphone that is actually capturing a microphone signal. The central unit processes the audio signals of all conference units of the group of conference units to a single processed signal. The single processed signal is downstream transmitted to each conference unit of the group of conference units.

The pulse used by any conference unit from the group of conference units is separated in time from the pulse used by any other conference unit from said group. The pulses are separated such that the predefined time at which a conference unit starts recording the single processed signal falls outside every period with a length equal to twice the predefined length of the pulse and starting at the predefined time at which any of the other conference units of said group starts recording the single processed signal. This means that if there is a circular cross correlation between the single processed signal and the pulse in a conference unit, the processed pulse in the recorded single processed signal is originating from that same conference unit.

This embodiment is beneficial to determine the roundtrip latency in multiple conference units of a conference system, even when the conference system is in use. The disadvantage is that when the roundtrip latency is recalculated periodically, the period has to be sufficiently long to be able to separate the pulses of the different conference units in said group.

In a preferred embodiment the arrival time of the processed pulse is determined in the processed signal by cross correlating the processed signal with the pulse as described in a previous embodiment. The central unit receives from each conference unit of a group of conference units an audio signal. The group of conference units may comprise all conference units or a subgroup of conference units. A subgroup of conference units comprises at least two conference units. The group may have a changing composition. For instance the group may comprise all conference units having a microphone that is actually capturing a microphone signal. The pulse used by any conference unit from the group of conference units is orthogonal to the pulse used by any other conference unit from said group. The pulse is preferably an MLS or a transformed MLS as described in previous embodiments. The central unit processes the audio signals of all conference units of the group of conference units to a single processed signal. The single processed signal is downstream transmitted to each conference unit of the group of conference units.

This embodiment is beneficial to determine the roundtrip latency in multiple conference units of a conference system, even when the conference system is in use. Because the pulses are orthogonal, the pulses of the different conference units may even coincide. If there is a cross correlation between the single processed signal and the pulse in a conference unit, the processed pulse in the recorded single processed signal is originating from that same conference unit.

In a further embodiment the conference units of the group of conference units upstream transmit their audio signal to the central unit in separate channels. Each channel uses a different time slot of a time division multiple access scheme. A different pulse is pre-assigned to each of said different time slots. This embodiment is advantageous because the conference units of said group use automatically pulses that are orthogonal. No further setup is required, even when the composition of said group changes dynamically.

In a preferred embodiment a confidence level is determined for a maximum peak in the cross correlation of the processed signal and the pulse. The confidence level is higher as the maximum peak is larger compared to other peaks in the cross correlation. A position of the maximum peak determines the arrival time of the processed pulse in the processed signal when the confidence level is equal to or greater than a predefined level. This embodiment is beneficial to increase the robustness of the method. It is possible when cross correlating the processed signal with the pulse that multiple peaks appear in the calculated cross correlation. The processed pulse is most likely positioned in the processed signal at the maximum peak. The larger the maximum peak is compared to other peaks in the calculated cross correlation, the more confidence one can have that the position of this maximum peak can be used to determine the arrival time of the processed pulse. When the confidence level is smaller than the predefined value, the maximum peak should not be used to determine the arrival time of the processed pulse.

It is clear that when a group of conference units are upstream transmitting an audio signal comprising a pulse, as described for instance in previous embodiments, preferably each of the conference units of said group determine a confidence level.

In a preferred embodiment the conference unit subtracts from the processed signal an estimated contribution of its own audio signal, wherein the estimated contribution is based on a delayed version of its own audio signal, wherein its own audio signal is delayed by a period equal to the calculated roundtrip latency. This is a so-called local mix-minus solution for avoiding hauling or whistling, also known as the Larsen effect.

It is clear that when a group of conference units are upstream transmitting an audio signal comprising a pulse, as described for instance in previous embodiments, preferably each of the conference units of said group subtract the estimated contribution of its own audio signal from the processed signal. It is also clear that when the roundtrip latency is periodically recalculated, a most recently calculated roundtrip latency is used to delay the own audio signal.

An example of a local mix-minus solution is described in EP 4 485 971, which is hereby incorporated by reference.

In a second aspect, the invention relates to a conference system.

The conference system comprises a central unit, a plurality of conference units and a network for coupling said conference units to said central unit.

The conference system may comprise a first network to upstream transmit an audio signal from a conference unit to the central unit over a first network. The conference system may comprise a second network to downstream transmit a processed signal from the central unit to the conference units. The first and the second network are preferably the same network. The network may be a wired network, such as an ethernet network, or a wireless network, such as a Wi-Fi network.

The conference units comprise a microphone and a loudspeaker. The microphone is suited for capturing a speaker's voice. The conference units comprise a transmitter for sending an audio signal over the first network to the central unit. The conference units comprise a receiver for receiving the processed signal from the central unit. Preferably the transmitter and the receiver are combined in a transceiver.

The central unit comprises processing means for processing the audio signals of the conference units. These means comprise memory, and a processor or a controller or a FPGA or a dedicated DSP processor or any combination thereof. The central unit is configured to apply processing steps on the audio signals of the conference units like automatic gain control (AGC), automatic gain reduction (AGR), equalizing, filtering, noise reduction, ... The central unit is preferably configured for mixing audio signals originating from two or more other conferencing units of the conference system. The central unit is for instance a controller, a server, a computer, or another suited device. The central unit comprises a receiver to receive audio signals from the conference units over the first network. The central unit comprises a transmitter to transmit a processed signal over the second network to the conference units. Preferably the transmitter and the receiver are combined in a transceiver. The central unit may comprise an interface for coupling an external unit for processing the audio signals of the conference units. The interface may be an audio interface, a network interface or another suited interface.

In a preferred embodiment the central unit and the conference units comprise means for carrying out a method according to the first aspect. These means comprise memory, and a processor or a controller or a FPGA or a dedicated DSP processor or any combination thereof.

This conference system has the advantage that each conference unit can easily and independently determine the roundtrip latency. The roundtrip latency does not have to be known or determined upfront for each conference unit individually, for instance with the use of external tools. Also beneficial is that the roundtrip latency may be different for each conference unit.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

In what follows, the invention is described by way of non-limiting figures illustrating the invention, and which are not intended to and should not be interpreted as limiting the scope of the invention.

### Description of the figures

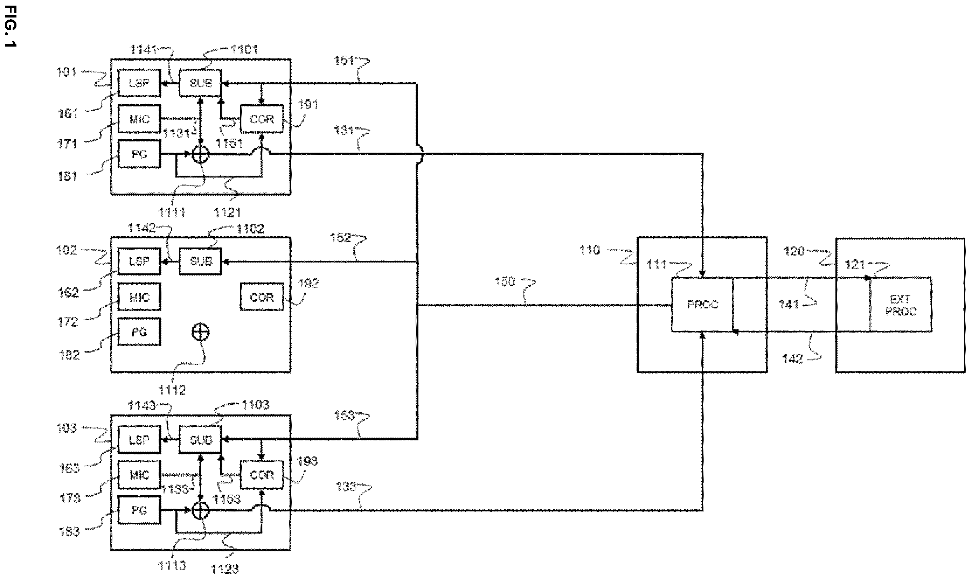

**Figure 1** shows a functional block scheme of a conference system according to an embodiment of the current invention.

The conference system comprises three conference units (101, 102, 103), a central unit (110) and an external unit (120). Each of the three conference units (101, 102, 103) comprises a microphone (171, 172, 173) and a loudspeaker (161, 162, 163). The microphones (171, 172, 173) are configured for capturing a microphone signal (1131, 1133) of a speaker's voice. In Figure 1 only the microphones (171, 173) are open and capturing a microphone signal (1131, 1133). The microphone (172) is closed and consequently not capturing a microphone signal. Each of the three conference units (101, 102, 103) comprises a pulse generation block (181, 182, 183) for generating a pulse (1121, 1123). In Figure 1 only the conference units (101, 103) generate a pulse (1121, 1123). These are the conference units (101, 103) with an open microphone (171, 173). Although the microphone (172) is closed, the conference unit (102) could still generate a pulse. This could still be useful to determine a roundtrip latency for the conference unit (102) before the microphone (172) is used. However, in Figure 1 this is not the case. Each of the three conference units (101, 102, 103) comprises a mixer (1111, 1112, 1113) for mixing the microphone signal (1131, 1133) with the pulse (1121, 1123), resulting in an audio signal (131, 133) that is upstream transmitted to the central unit (110). Because the microphone (172) is closed, the mixer (1112) is also not used and no audio signal is upstream transmitted by the conference unit (102). It is clear that if the conference unit (102) would generate a pulse, the conference unit (102) would upstream transmit an audio signal to the central unit (110) that comprises the pulse, but no microphone signal. The audio signals (131, 133) are processed in processor (111) of the central unit (110). The pulses (1121, 1123) are in-band signals. Consequently, also the pulses (1121, 1123) are processed in processor (111), resulting in processed pulses which are equally delayed as the microphone signals (1131, 1133) in the audio signals (131, 133). Non-limitative examples of possible processing in the central unit (110) are automatic gain control (AGC), automatic gain reduction (AGR), equalizing, filtering, noise reduction, etc. In this case the processing comprises mixing of the audio signals (131, 133) in a single processed signal (150). Figure 1 shows that the audio signals (131, 133) are also processed in processor (121) of the external unit (120). Therefore the audio signals (131, 133) are forwarded over an audio interface (141) to the external unit (120) and after processing returned over an audio interface (142) to the central unit (110). It is clear that the audio interfaces (141, 142) could also be combined in for instance a single network interface. The processing in the external unit (120) may occur before, after or as an intermediate step of the processing in the central unit (110). The processing on the external unit (120) is optional. The single processed signal (150) is downstream transmitted by the central unit (110) to the conference units (101, 102, 103). The processed signal (151, 152, 153) received by the conference units (101, 102, 103) is each time the single processed signal (150). Each of the three conference units (101, 102, 103) comprises a subtraction block (1101, 1102, 1103) and a cross correlation block (191, 192, 193). The cross correlation block (191, 193) cross correlates the processed signal (151, 153) with the pulse (1121, 1123) to determine an arrival time of the processed pulses in the conference units (101, 103). It is clear to the skilled person that the processed signal (151, 153) must be cross correlated with the pulse (1121, 1123) as if it would also have been delayed with the roundtrip latency for the corresponding conference unit (101, 103). This can be done by regenerating the pulse (1121, 1123) at time of cross correlation or by storing the pulse (1121, 1123) in memory and reading the pulse at time of cross correlation from memory. The arrival time of the processed pulse is used to calculate the roundtrip latency (1151, 1153) for the conference unit (101, 103). The pulses (1121, 1123) are orthogonal. This means that the conference unit (101) will only be able to determine the arrival time of the processed pulse corresponding with the pulse (1121) and the conference unit (103) the arrival time of the processed pulse corresponding with the pulse (1123). The calculated roundtrip latencies (1151, 1153) are therefore specific to the conference units (101, 103). The calculated roundtrip latencies (1151, 1153) are used in the subtraction blocks (1101, 1103) to subtract from the processed signal (151, 153) an estimated contribution of its own microphone signal (1131, 1133). The estimated contribution is based on a delayed version of its own microphone signal (1131, 1133), wherein its own microphone signal (1131, 1133) is delayed by a period equal to the calculated roundtrip latency (1151, 1153). This results in a loudspeaker signal (1141, 1143) that in an ideal situation is equal to the processed signal (151, 153), minus the contribution of its own microphone signal (1131, 1133). Because in Figure 1 conference unit (102) is not generating a pulse, the cross correlation block (192) is not used. Because in Figure 1 conference unit (102) is not generating a microphone signal the subtraction block (1102) may be a simple bypass of the processed signal (152) to a loudspeaker signal (1142). As explained before, it is however possible to generate a pulse without capturing a microphone signal. In that case, the cross correlation block (192) could be used to calculate the roundtrip latency for the conference unit (102), although the subtraction block (1102) could still be a simple bypass. The loudspeaker signals (1141, 1142, 1143) are played through the loudspeakers (161, 162, 163).

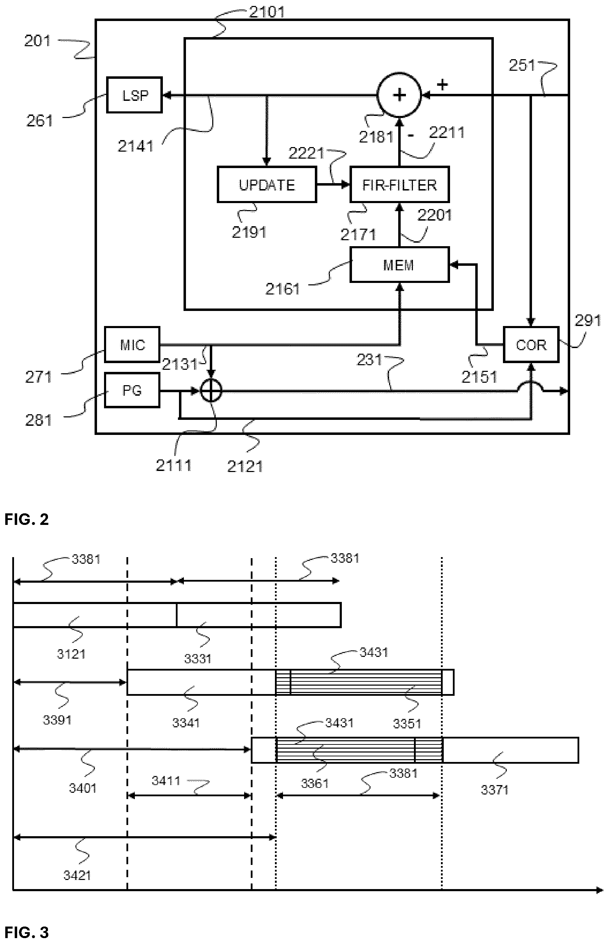

**Figure 2** shows a functional block scheme of a conference unit of a conference system according to an embodiment of the current invention.

The conference unit (201) is identical to the conference unit (101) in Figure 1. The conference unit (201) comprises a microphone (271) for capturing a microphone signal (2131), a pulse generation block (281) for generating a pulse (2121) and a mixer (2111) for mixing the microphone signal (2131) and the pulse (2121), resulting in an audio signal (231) that is upstream transmitted to a central unit of the conference system. The conference unit (201) further comprises a cross correlation block (291) to cross correlate a processed signal (251) received from the central unit with the pulse (2221) as explained before. The cross correlation block (291) is used to calculate a roundtrip latency (2151). The subtraction block (2101) is used to remove a contribution of the own microphone signal (2131) from the processed signal (251) to generate a loudspeaker signal (2141) that is played through the loudspeaker (261). The microphone signal (2131) is stored in a memory (2161) and read from the memory (2161) with a delay proportional to the calculated roundtrip latency (2151). The memory (2161) is thus used to create a delayed microphone signal (2201). The roundtrip latency (2151) could be calculated once at startup of the conference system or periodically. This means that the delay between the microphone signal (2131) and the delayed microphone signal (2201) is a fixed delay in the former case or a periodically changing delay in the latter case. The memory (2161) can be used to adjust for important changes in the delay, but only react as fast as the periodical calculation of the roundtrip latency (2151). The delayed microphone signal (2201) is supplied to a FIR filter (2171). The FIR filter (2171) generates an estimated contribution (2211) of the microphone signal (2131) to the processed signal (251). This estimated contribution (2211) is subtracted in the adder (2181) from the processed signal (251), resulting in the loudspeaker signal (2141). The filter coefficients (2221) of the FIR filter (2171) must be set to compensate for the processing that the microphone signal (2131) undergoes in the central unit and optionally an external unit. This is realised by adaptively updating the filter coefficients (2221) of the FIR filter (2171). This task is executed by coefficient updater (2191) which receives as input the loudspeaker signal (2141) from the adder (2181), and which calculates updates for the filter coefficients (2221) of the FIR filter (2171) that minimize the energy of the microphone signal (2131) in the loudspeaker signal (2141). The FIR filter (2171) can also compensate for small and fast changes in roundtrip latency, in between updates of the roundtrip latency (2151) from the cross correlation block (291).

**Figure 3** shows a recording of a processed pulse according to an embodiment of the current invention.

As in a previously described embodiment, the pulse (3121) is immediately repeated by an identical pulse (3331). Both pulses have consequently an identical predefined length (3381). The pulse (3121) and the identical pulse (3331) are a maximum length sequence or a transformed maximum length sequence. The pulse (3121) and the identical pulse (3331) are comprised in an audio signal that is upstream transmitted from a conference unit to a central unit and processed in said unit. For simplicity, the pulse (3121) and the identical pulse (3331) are the only signals in the audio signal. A processed signal, in this case only comprising a processed pulse (3341, 3361) and a processed identical pulse (3351, 3371), is downstream transmitted to the conference unit. Figure 3 shows two situations, a first situation with a predefined minimum expected roundtrip latency (3391) and a second situation with a predefined maximum expected roundtrip latency (3401). The processed signal is recorded at a predetermined time (3421) after a start time of the pulse (3121) during a period (3431) that is equal to the predefined length (3381). The processed pulse (3341, 3361) and the processed identical pulse (3351, 3371) are shaded during this period (3431). Figure 3 clearly shows that the predefined length (3381) is longer than a difference (3411) between the predefined maximum expected roundtrip latency (3401) and the predefined minimum expected roundtrip latency (3391). The processed pulse (3341) has a length equal to the predefined length (3381) that is longer than the difference (3411). Because the (transformed) maximum length sequences are periodic, one will always record a complete period of the (transformed) maximum length sequence. When the predetermined time (3421) is equal to the predefined maximum expected roundtrip latency (3401), the complete processed pulse (3361) will be recorded when the roundtrip latency is actually equal to the predefined maximum expected roundtrip latency (3401), and a last part of the processed pulse (3341) and a first part of the processed identical pulse (3351) will be recorded when the roundtrip latency is actually smaller than the predefined maximum expected roundtrip latency (3401). When the predetermined time (3421) is equal to the predefined minimum expected roundtrip latency (3391) plus the predefined length (3381), the complete processed identical pulse (3351) will be recorded when the roundtrip latency is actually equal to the predefined minimum expected roundtrip latency (3391), and a last part of the processed pulse (3361) and a first part of the processed identical pulse (3371) will be recorded when the roundtrip latency is actually greater than the predefined maximum expected roundtrip latency (3401). Because the predefined length (3381) is bigger than the difference (3411) it is not possible to be outside one of these two situations. Thanks to the correlation property of maximum length sequences, this single recording of a complete period is sufficient to circularly cross correlate the processed signal with the pulse (3121). In the two depicted cases it is not possible to get the position of the processed pulse (3341, 3361), but it is possible to get the position of the processed identical pulse (3351, 3371). From this position it is possible to get the position of the processed pulse (3341, 3361) by subtracting the predefined length (3381).

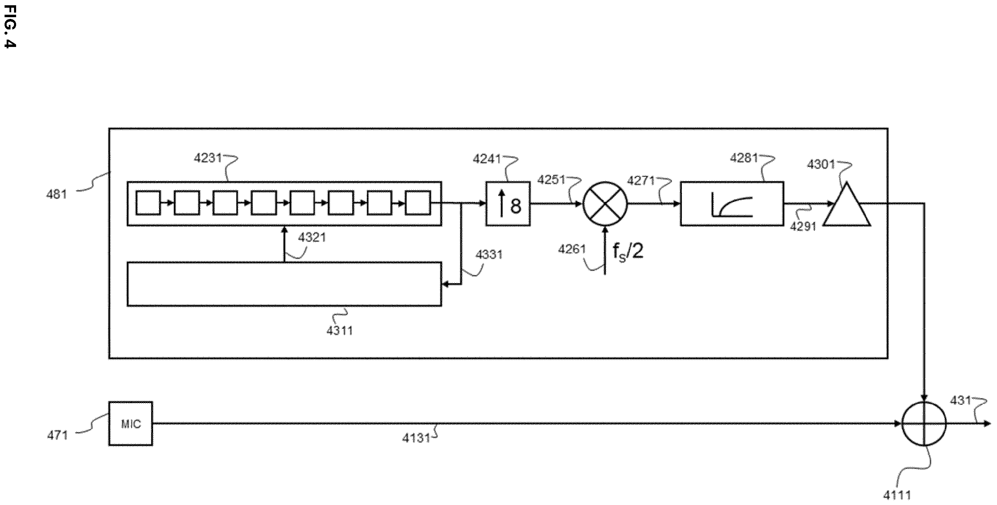

**Figure 4** shows a functional block scheme of a pulse generation block according to an embodiment of the current invention.

The pulse generation block (481) is suitable for use in the conference units (101, 102 ,103) in Figure 1 and the conference unit (202) in Figure 2, although other pulse generation blocks are conceivable. The pulse generation block (481) generates a transformed maximum length sequence. The maximum length sequence is generated with a shift register (4231). In this embodiment, the shift register (4231) has eight positions. Every clock cycle, bits in the shift register (4231) are shifted one position to the right. The least significant bit (4331) is shifted out and is used as a bit of the maximum length sequence. The shift register (4231) is a linear feedback shift register (LFSR). Every clock cycle, the least significant bit (4331) is used as term (4321) for an addition. The term (4321) is modulo two added to the values of some other positions in the shift register (4231). For each of these positions, the result of the modulo two addition is shifted in the position immediately to the right of the current position in the shift register (4231). A polynomial (4311) describes which positions in the shift register (4231) are used in the module two addition. Suitable polynomials can be found in "W. Stahnke, Primitive binary polynomials", among others. For instance a suitable polynomial for generating a maximum length sequence with a shift register (4231) with eight positions is a_{*i*+8} = a_{*i*+6} + a_{*i*+5} + *a*_{*i+*1} + *aᵢ.* Herein is a_{*i*+8} the least significant bit (4331), a_{*i*+7} the value in the position one to the right of a_{*i*+8}, and so on. The term (4321) is shifted every clock cycle in position *aᵢ*. The term (4321) is added modulo two to the position a_{*i*+6}, added modulo two to the position *a*_{*i+*5}, and added modulo two to the position *a*_{*i*+1}. This is called a Galois LFSR. A Galois LFSR can be implemented very efficiently in software. An alternative is a Fibonacci LFSR. The maximum length sequence is upsampled (4241) with a factor eight by repeating the least significant bit (4231) seven times. The ones in the upsampled maximum length sequence (4251) are replaced by the value 1. The zeros in the upsampled maximum length sequence (4251) are replaced by the value -1. The values 1 and -1 are samples representing the upsampled maximum length sequence (4251). It is clear that replacing the ones and zeros by the values 1 and -1 can also be done before the upsampling. In that case each sample is repeated seven times instead of each bit. The upsampled maximum length sequence (4251) is modulated at half the sample frequency (4261) by alternatingly multiplying it with 1 and -1. The modulated maximum length sequence (4271) is subsequently high pass filtered (4281), resulting in a transformed maximum length sequence (4291). Each sample of the transformed maximum length sequence (4291) may be amplified (4301) relative to a microphone signal (4131). It is wanted that the amplified transformed maximum length sequence has a low amplitude so that the pulse is not or almost not audible. The amplified transformed maximum length sequence may then be mixed in the mixer (4111) with the microphone signal (4131) captured by a microphone (471) of a conference unit to obtain an audio signal (431) that is upstream transmitted to a central unit of a conference system. A transformed maximum length sequence with a low amplitude is additionally beneficial because it significantly reduces the risk that the audio signal (431) saturates after mixing the maximum length sequence with the microphone signal (4131). On the other hand, the transformed maximum length sequence must have a sufficiently large amplitude such that after processing the audio signal (431) in a central unit of a conference system, the transformed maximum length sequence is still distinguishable in a processed audio signal.

## Claims

1. Method of determining a roundtrip latency in a conference system, comprising the steps of:
- generating a pulse with a predefined length in a conference unit of the conference system at a known start time, wherein the conference unit comprises a microphone and a loudspeaker;
- upstream transmitting an audio signal from the conference unit to a central unit of the conference system, wherein the audio signal comprises the pulse, and wherein the pulse is an in-band signal of the audio signal;
- processing the audio signal in the central unit, resulting in a processed signal, wherein the processed signal comprises a processed pulse;
- downstream transmitting the processed signal to the conference unit;
- determining in the conference unit an arrival time of the processed pulse in the processed signal;
- calculating the roundtrip latency as a difference between the start time of the pulse and the arrival time of the processed pulse.

2. Method according to claim 1, **characterized in that** the method comprises the additional steps of:
- capturing a microphone signal with the microphone of the conference unit;
- mixing the microphone signal in the conference unit with the pulse of the predefined length, resulting in the audio signal;
- playing the processed signal on the loudspeaker of the conference unit.

3. Method according to claim 1 or 2, **characterized in that** the roundtrip latency is periodically recalculated.

4. Method according to any of the previous claims 1 to 3, **characterized in that** the arrival time of the processed pulse is determined in the processed signal by cross correlating the processed signal with the pulse.

5. Method according to claim 4, **characterized in that** the pulse is a maximum length sequence or a transformed maximum length sequence.

6. Method according to claim 5, **characterized in that** transforming the maximum length sequence comprises the steps of:
- upsampling the maximum length sequence to an upsampled maximum length sequence;
- modulating the upsampled maximum length sequence to a modulated maximum length sequence;
- high pass filtering the modulated maximum length sequence to the transformed maximum length sequence.

7. Method according to any of the previous claims 4 to 6, **characterized in that** the processed signal is cross correlated with the pulse using a sliding window, wherein the sliding window has a length that is equal to the length of the pulse.

8. Method according to claim 5 or 6, **characterized in that** the pulse in the audio signal is immediately repeated by an identical pulse in said audio signal, wherein the processed signal is recorded in the conference unit from a predefined time after the start time of the pulse, wherein the processed signal is recorded during a period equal to the predefined length, wherein the predefined time is equal to or greater than a predefined maximum expected roundtrip latency and less than or equal to a predefined minimum expected roundtrip latency plus the predefined length, wherein the recorded processed signal is circularly cross correlated with the pulse.

9. Method according to claim 8, **characterized in that** the predefined length is equal to or greater than a difference between the predefined maximum expected roundtrip latency and the predefined minimum expected roundtrip latency.

10. Method according to claim 8 or 9, **characterized in that** the central unit receives from each conference unit of a group of conference units an audio signal, wherein the pulse used by any conference unit from the group of conference units is separated in time from the pulse used by any other conference unit from said group, wherein the central unit processes the audio signals of all conference units of the group of conference units to a single processed signal, and wherein the single processed signal is downstream transmitted to each conference unit of the group of conference units.

11. Method according to any of the previous claims 4 to 9, **characterized in that** the central unit receives from each conference unit of a group of conference units an audio signal, wherein the pulse used by any conference unit from the group of conference units is orthogonal to the pulse used by any other conference unit from said group, wherein the central unit processes the audio signals of all conference units of the group of conference units to a single processed signal, and wherein the single processed signal is downstream transmitted to each conference unit of the group of conference units.

12. Method according to claim 11, **characterized in that** the conference units of the group of conference units upstream transmit their audio signal to the central unit in separate channels, wherein each channel uses a different time slot of a time division multiple access scheme, and wherein a different pulse is pre-assigned to each of said different time slots.

13. Method according to any of the previous claims 4 to 12, **characterized in that** a confidence level is determined for a maximum peak in the cross correlation of the processed signal and the pulse, wherein the confidence level is higher as the maximum peak is larger compared to other peaks in the cross correlation, and wherein a position of the maximum peak determines the arrival time of the processed pulse in the processed signal when the confidence level is equal to or greater than a predefined level.

14. Method according to claim 2 and any of the previous claims 3 to 13, **characterized in that** the conference unit subtracts from the processed signal an estimated contribution of its own audio signal, wherein the estimated contribution is based on a delayed version of its own audio signal, wherein its own audio signal is delayed by a period equal to the calculated roundtrip latency.

15. Method according to any of the previous claims 1 to 14, **characterized in that** at least 80% of signal power of the pulse is above a threshold frequency, wherein the threshold frequency is at least 18 kHz.

16. Conference system comprising a central unit, a plurality of conference units and a network for coupling said conference units to said central unit, wherein a conference unit comprises a microphone and a loudspeaker, **characterized in that** the central unit and the conference units comprise means for carrying out a method according to any of the previous claims 1 to 14.
